# EUROPEAN PATENT SPECIFICATION

(11) **EP 3 322 227 B1**
(45) Date of publication and mention of the grant of the patent: **01.01.2020**
(21) Application number: 17200293.3
(22) Date of filing: 07.11.2017
(51) Int. Cl.: H04W 52/02

(54) **METHODS AND APPARATUSES FOR CONTROLLING WIRELESS CONNECTION, COMPUTER PROGRAM AND RECORDING MEDIUM**
VERFAHREN UND VORRICHTUNGEN ZUR STEUERUNG EINER DRAHTLOSEN VERBINDUNG, COMPUTERPROGRAMM UND AUFZEICHNUNGSMEDIUM
PROCÉDÉS ET APPAREILS DE COMMANDE DE CONNEXION SANS FIL, PROGRAMME INFORMATIQUE ET SUPPORT D'ENREGISTREMENT

(30) Priority: 14.11.2016 CN 201611000825
(43) Date of publication of application: 16.05.2018
(73) Proprietor: Beijing Xiaomi Mobile Software Co., Ltd., Beijing 100085 (CN)
(72) Inventor: HOU, Enxing, Beijing 100085 (CN)
(74) Representative: dompatent von Kreisler Selting Werner - Partnerschaft von Patent- und Rechtsanwälten mbB

(56) References cited:
- WO-A1-2016/111537
- US-A1- 2015 103 708

## Description

### TECHNICAL FIELD

The present invention generally relates to the technical field of terminals, and more particularly, to methods and apparatuses for controlling wireless connection, a computer program and a recording medium.

### BACKGROUND

Smart home has been widely used in daily lives. With smart home, a user may control electronic devices at home to perform various operations as desired. Implementation of the versatile functions of the smart home requires connection between the electronic devices and a server for data communication. When an electronic device is connected to a server by accessing, through Wireless-Fidelity (Wi-Fi), a wireless local area network provided by a router, considerable amount of power consumption may be generated.

US 2015/103708 discloses a method of operating a device as an access point.

WO 2016/111537 describes an apparatus and a method for proving tethering service in an electronic device.

### SUMMARY

In order to overcome the problem existing in the related art, the present invention provides methods and apparatuses for controlling wireless connection, a computer program and a recording medium.

According to a first aspect of the embodiments of the present invention, there is provided a method for controlling wireless connection, implemented in an electronic device, wherein the electronic device comprises a wireless local area network (WLAN) function. The method comprising the steps of: when the electronic device is connected to a server by accessing a WLAN provided by a router it is detected whether a mobile terminal exists which is entering a range of a connection of a first connection manner,; establishing a first connection with the mobile terminal through the first connection manner when the mobile terminal is detected, the first connection manner being a connection manner with a power consumption lower than that for the WLAN function of the electronic device; and disabling the WLAN function, and performing communication with the server through the first connection and via a second connection between the mobile terminal and the server.

In the embodiment, when the electronic device is connected to the server by accessing a WLAN provided by a router, once it is detected that a mobile terminal has entered a range of connection of a first connection manner, the electronic device establishes a connection with the mobile terminal through the first connection manner, and disable the WLAN function, such that the electronic device performs communication with the server via the mobile terminal through the first connection manner which has a power consumption lower than that for the WLAN function. Thus, it may solve the problem in the related art that the power consumption is large for the connection between the electronic device and the server by reducing the power consumption for wireless communication between the electronic device and the server.

Optionally, the WLAN function is enabled when the first connection is disconnected, and a third connection is established with the router through the WLAN, and communication with the server is performed through the third connection.

In the embodiment, by enabling the wireless local area network function when the first connection is disconnected, the electronic device may always keep connection with the server, improving stability of the communication between the electronic device and the server.

Optionally, the second connection is a connection established by the mobile terminal with the server through the WLAN or a data network.

In the embodiment, the mobile terminal may be connected with the server through the WLAN or a data network, such that the electronic device may be connected with the server through the WLAN or the data network via the mobile terminal. Thus, it may enrich the connection manners between the electronic device and the server, and improve the stability of the communication between the electronic device and the server.

Optionally, the WLAN comprises Wireless-Fidelity Wi-Fi, and the first connection manner comprises Bluetooth Low Energy BLE.

In the embodiment, the first connection manner between the electronic device and the server may be BLE, which may reduce the power consumption for the wireless communication between the electronic device and the server.

According to a second aspect of the embodiments of the present invention, there is provided an apparatus for controlling wireless connection, which is implemented in an electronic device, the apparatus comprising a detection module, a first connection module, a communication control module and a wireless local area network (WLAN) function, wherein the detection module is configured to detect whether a mobile terminal exists which is entering a range of a connection of a first connection manner if the electronic device is connected to a server by accessing a WLAN provided by a router; the first connection module is configured to establish a first connection with the mobile terminal through the first connection manner when the mobile terminal is detected, the first connection manner being a connection manner with power consumption lower than that for the WLAN function of the electronic device; and the communication control module is configured to disable the WLAN function, and perform communication with the server through the first connection and via a second connection between the mobile terminal and the server.

Optionally, the apparatus of claim also includes: an enabling module and a third connection module, wherein the enabling module is configured to enable the WLAN function of the electronic device when the first connection is disconnected, and the third connection module is configured to establish a third connection between the WLAN and the router, and perform communication with the server through the third connection.

Optionally, the second connection is a connection established by the mobile terminal with the server through the WLAN or a data network.

Optionally, the WLAN comprises Wireless-Fidelity Wi-Fi, and the first connection manner comprises Bluetooth Low Energy BLE.

According to a third aspect of the embodiments of the present invention, there is provided a non-transitory computer readable storage medium, when instructions in the storage medium are performed by a processor of a mobile terminal, the mobile terminal is enabled to perform the method for controlling wireless connection provided by the first aspect.

In one particular embodiment, the steps of the method for controlling wireless connection are determined by computer program instructions.

Consequently, according to a fourth aspect, the invention is also directed to a computer program for executing the steps of the method for controlling wireless connection as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiment of the present invention may have the following beneficial effects.

When the electronic device is connected to the server by accessing a WLAN provided by a router, once it is detected that a mobile terminal has entered a range of connection of a first connection manner, the electronic device establishes a connection with the mobile terminal through the first connection manner, and disable the WLAN function, such that the electronic device performs communication with the server via the mobile terminal through the first connection manner which has a power consumption lower than that for the WLAN function. Thus, it may solve the problem in the related art that the power consumption is large for the connection between the electronic device and the server by reducing the power consumption for wireless communication between the electronic device and the server.

It is to be understood that both the foregoing general description and the following detailed description are exemplary only and are not restrictive of the present invention.

### BRIEF DESCRIPTION OF THE DRAWINGS

The accompanying drawings herein, which are incorporated in and constitute a part of this specification, illustrate embodiments consistent with the present invention and, together with the description, serve to explain the principles of the present invention.
Fig. 1 is a flowchart illustrating a method for controlling wireless connection according to an exemplary embodiment;
Fig. 2 is a flowchart illustrating another method for controlling wireless connection according to an exemplary embodiment;
Fig. 3 is a flowchart illustrating a method for controlling wireless connection not being part of the present invention;
Fig. 4 is a block diagram illustrating an apparatus for controlling wireless connection according to an exemplary embodiment;
Fig. 5 is a block diagram illustrating another apparatus for controlling wireless connection according to an exemplary embodiment;
Fig. 6 is a block diagram illustrating an apparatus for controlling wireless connection not being part of the present invention;
Fig. 7 is a block diagram illustrating an apparatus configured to control wireless connection according to an exemplary embodiment; and
Fig. 8 is a block diagram illustrating another apparatus configured to control wireless connection according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of devices and methods consistent with aspects related to the present invention as recited in the appended claims.

Prior to introduction of the method for controlling wireless connection provided by the present invention, application scenario of the embodiments of the present invention will be firstly described. The application scenario may include an electronic device, which may be a home appliance, a smart wearable device, a medical device or the like in a smart home system, for example. The application scenario may also include a mobile terminal, which may be, for example, a mobile terminal such as a smart phone, a tablet PC, a smart TV, a smart watch, a PDA (Personal Digital Assistant), a portable computer or the like. Both of the electronic device and the mobile terminal support for WLAN (Wireless Local Area Network) and Bluetooth function. In the present invention, Bluetooth may support Bluetooth Low Energy (BLE) technology. WLAN may be Wi-Fi, and the WLAN function of the electronic device and the mobile terminal may refer to Wi-Fi function. The exemplary embodiments will be described when both of the electronic device and the mobile terminal support a first connection manner of BLE, for example.

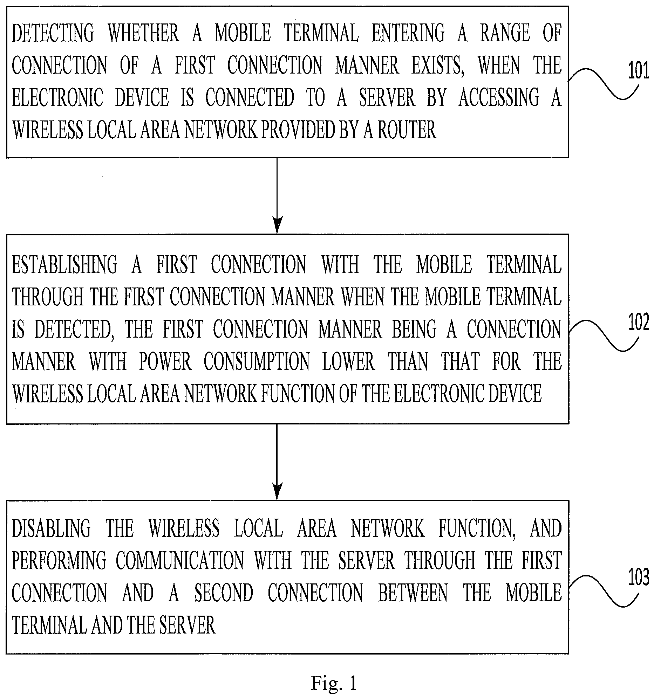

Fig. 1 is a flowchart illustrating a method for controlling wireless connection according to an exemplary embodiment. As shown in Fig. 1, the method may be implemented in an electronic device. The method includes the following steps.

At step 101, when the electronic device is connected to a server by accessing a WLAN provided by a router, it is detected whether a mobile terminal entering a range of connection of a first connection manner exists.

For example, the electronic device generally accesses the Wi-Fi network provided by the router through a Wi-Fi connection manner, so as to perform data communication with the server over the Wi-Fi network. In case where the first connection manner is BLE, for example, when the electronic device performs data communication with the server by connecting to the router through the Wi-Fi connection, it may be detected in real time whether a mobile terminal exists within the range of the BLE connection. For example, both of the electronic device and the mobile terminal may emit BLE signals at a preset cycle, in order for other devices supporting BLE function to find the electronic device or the mobile terminal. Therefore, the electronic device may search for BLE signals of other devices at a fixed time interval. Generally, a mobile terminal, when its BLE function is enabled, may also search for BLE signals of other devices at a fixed time interval. When a mobile terminal moves into a range of BLE connection of the electronic device, the electronic device may capture the BLE signal of the mobile terminal. At this time, the mobile terminal generally may also find the electronic device. Then, both of them may establish connection through BLE.

At step 102, when a mobile terminal is detected, a first connection is established with the mobile terminal through the first connection manner, the first connection manner being a connection manner with power consumption lower than that for the WLAN function of the electronic device.

For example, in case where the first connection manner is BLE, when the electronic device detects a mobile terminal, it may be firstly determined whether the mobile terminal has previously established a bundling relationship with the electronic device. For example, the electronic device may store a terminal list for recording connectable mobile terminals. The list may record one or more mobile terminals which have previously established bundling relationship with the electronic device. When the electronic device detects a mobile terminal, the electronic device may determine the identity of the mobile terminal with the list. If the identification (such as a device number, a device name or a network identification) of the mobile terminal is in the terminal list, it may be determined that the mobile terminal has been bundled with the electronic device. In this case, the electronic device may establish the first connection with the mobile terminal through BLE. In addition, if the identification of the mobile terminal is not in the terminal list, the electronic device does not act, or may establish a bundling relationship with the mobile terminal and then establish a first connection with the mobile terminal through BLE.

In the embodiment, the bundling relationship between the electronic device and the mobile terminal may be performed by a smart home APP installed on the mobile terminal. Each mobile terminal may be bundled with one or more electronic devices by the APP.

At step 103, the WLAN function is disabled, and communication is performed with the server through the first connection and a second connection between the mobile terminal and the server.

In the embodiment, the second connection between the mobile terminal and the server may be a connection established by the mobile terminal with the server through the above mentioned WLAN, such as Wi-Fi, or a data network, such as 3G, 4G. The mobile terminal may establish a connection with the server through any one of the above mentioned manners, which may be selected by the mobile terminal. It is not necessary for the electronic device to know about the connection manner between the mobile terminal and the server. Since the BLE connection manner has power consumption lower than that of Wi-Fi in a standby mode, for data transmission and in other aspects, after the electronic device establishes a connection with the mobile terminal through the BLE connection manner, the Wi-Fi function of the electronic device may be disabled, such that the electronic device may communicate with the server through the BLE connection with the mobile terminal, the first connection established through BLE and the second connection between the mobile terminal and the sever. Thus, it is possible to reduce the power consumption for communication between the electronic device and the server.

As an example, after the electronic device establishes the first connection with the mobile terminal detected at step 101 through the BLE connection manner, the electronic device may send data to the mobile terminal through the first connection, and the mobile terminal may forward the data which is sent from the electronic data to the server through the second connection. When the server is about to send data to the electronic device, the server may firstly sent the data to the mobile terminal through the second connection and then the mobile terminal may forward the data which is sent from the server to the electronic device through the first connection. Accordingly, the mobile terminal serves as a relay for communication between the electronic device and the server. Since the first connection is a connection with the mobile terminal in the BLE connection manner which has power consumption lower than that of Wi-Fi, it is possible to reduce the power consumption for communication between the electronic device and the server.

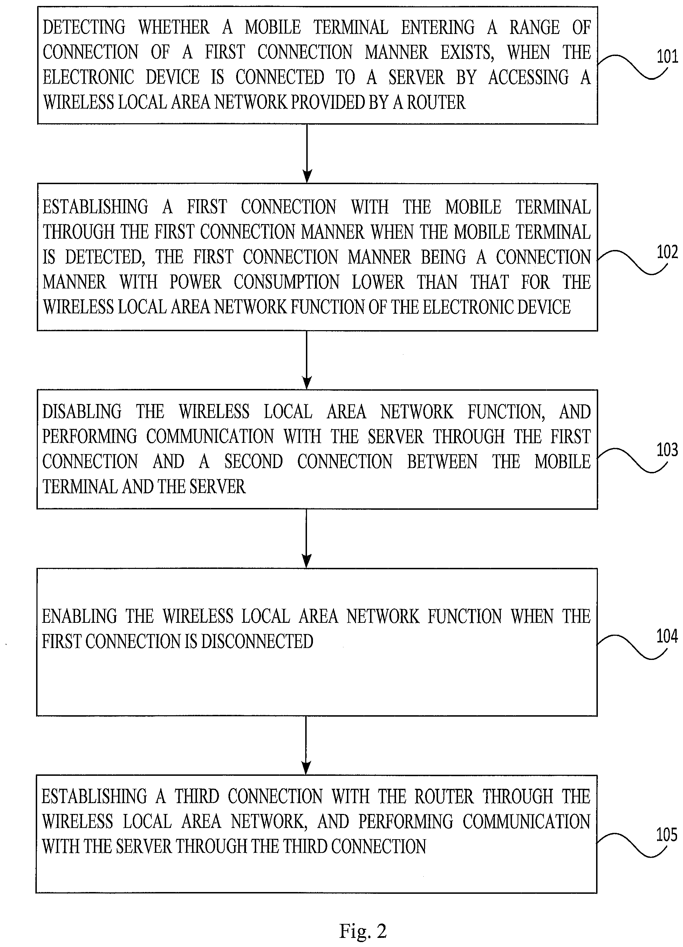

Fig. 2 is a flowchart illustrating another method for controlling wireless connection according to an exemplary embodiment. As shown in Fig. 2, based on the method for controlling wireless connection as shown in Fig. 1, the method also includes the following steps.

At step 104, when the first connection is disconnected, the WLAN function of the electronic device is enabled.

Also in the example when the WLAN is a Wi-Fi network and the first connection manner is BLE, when the mobile terminal connected to the electronic device at step 102 moves out of the connection range of the BLE connection manner, the first connection between the electronic device and the mobile terminal is disconnected, and then, the Wi-Fi function of the electronic device needs to be enabled.

At step 105, a third connection is established with the router through the WLAN, and communication is performed with the server through the third connection.

For example, after the electronic device enables the Wi-Fi function, the electronic device may access the Wi-Fi network provided by the router, so as to establish a third connection. Then, the electronic device may perform data communication with the server through the Wi-Fi network.

Accordingly, in the method for controlling wireless connection provided by the embodiment, when the electronic device is connected to the server by accessing a WLAN provided by a router, once it is detected that a mobile terminal has entered a range of connection of a first connection manner, the electronic device establishes a connection with the mobile terminal through the first connection manner, and disable the WLAN function, such that the electronic device performs communication with the server via the mobile terminal through the first connection manner which has a power consumption lower than that for the WLAN function. Thus, it may solve the problem in the related art that the power consumption is large for the connection between the electronic device and the server by reducing the power consumption for wireless communication between the electronic device and the server.

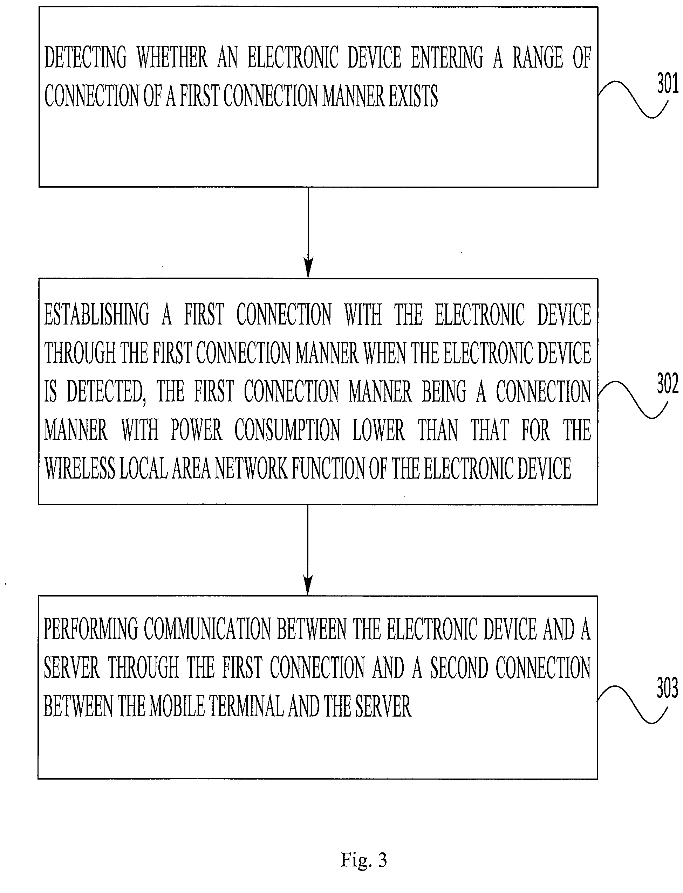

Fig. 3 is a flowchart illustrating a method for controlling wireless connection. As shown in Fig. 3, the method may be implemented in a mobile terminal. The method includes the following steps.

At step 301, it is detected whether an electronic device entering a range of connection of a first connection manner exists.

For example, in case where the first connection manner is BLE, the mobile terminal may search for a connectable BLE signal at a fixed time interval, or search for a connectable BLE signal within a preset time period. Alternatively, the mobile terminal may search for an electronic device within a corresponding preset time period according to a list of connectable BLE signals preset in the mobile terminal. For example, both of the electronic device and the mobile terminal may emit BLE signals at a preset cycle, in order for other devices supporting BLE function to find the electronic device or the mobile terminal. Therefore, the electronic device may search for BLE signals of other devices at a fixed time interval. Generally, a mobile terminal, when its BLE function is enabled, may also search for BLE signals of other devices at a fixed time interval. When a mobile terminal moves into a range of BLE connection of the electronic device, the mobile terminal may capture the BLE signal of the electronic device. At this time, the electronic device generally may also find the mobile terminal. Then, both of them may establish connection through BLE.

At step 302, when an electronic device is detected, a first connection is established with the electronic device through the first connection manner, the first connection manner being a connection manner with power consumption lower than that for the WLAN function of the electronic device.

In the method, the process of the mobile terminal establishing the first connection with the electronic device detected at step 301 through the BLE connection manner is similar to the process of establishing connection at step 102, which will not be repeated herein.

At step 303, communication between the electronic device and a server is performed through the first connection and a second connection between the mobile terminal and the server.

After the mobile terminal establishes the first connection with the electronic device, the electronic device may send data to the mobile terminal through the first connection, and the mobile terminal may forward the data which is sent from the electronic data to the server through the second connection. When the server is about to send data to the electronic device, the server may firstly sent the data to the mobile terminal through the second connection and then the mobile terminal may forward the data which is sent from the server to the electronic device through the first connection. Accordingly, the mobile terminal serves as a relay for communication between the electronic device and the server. Since the connection with the mobile terminal is in the BLE connection manner which has power consumption lower than that of Wi-Fi, it is possible to reduce the power consumption for communication of the electronic device.

In this method, the second connection between the mobile terminal and the server may be a connection established by the mobile terminal with the server through the above mentioned WLAN, such as Wi-Fi, or a data network, such as 3G, 4G. The mobile terminal may establish a connection with the server through any one of the above mentioned manners, which may be selected by the mobile terminal. It is not necessary for the electronic device to know about the connection manner between the mobile terminal and the server.

Accordingly, in the method for controlling wireless connection provided by the example, when the electronic device is connected to the server by accessing a WLAN provided by a router, once it is detected that a mobile terminal has entered a range of connection of a first connection manner, the electronic device establishes a connection with the mobile terminal through the first connection manner, and disable the WLAN function, such that the electronic device performs communication with the server via the mobile terminal through the first connection manner which has a power consumption lower than that for the WLAN function. Thus, it may solve the problem in the related art that the power consumption is large for the connection between the electronic device and the server by reducing the power consumption for wireless communication between the electronic device and the server.

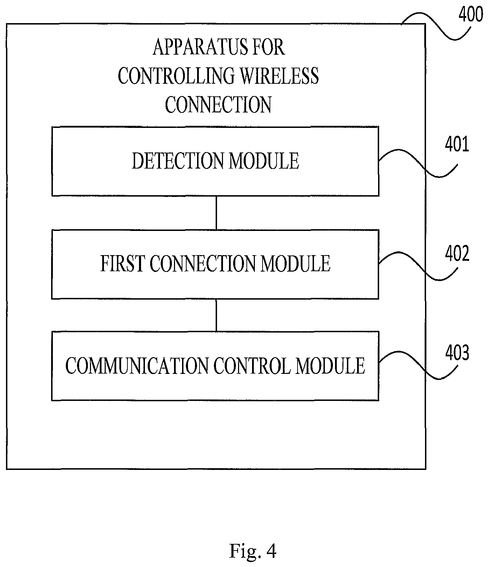

Fig. 4 is a block diagram illustrating an apparatus for controlling wireless connection according to an exemplary embodiment. As shown in Fig. 4, the apparatus may be implemented in an electronic device, and includes a detection module 401, a first connection module 402 and a communication control module 403.

The detection module 401 is configured to detect whether a mobile terminal entering a range of connection of a first connection manner exists, when the electronic device is connected to a server by accessing a wireless local area network provided by a router.

The first connection module 402 is configured to establish a first connection with the mobile terminal through the first connection manner when the mobile terminal is detected, the first connection manner being a connection manner with power consumption lower than that for the wireless local area network function of the electronic device.

The communication control module 403 is configured to disable the wireless local area network function, and perform communication with the server through the first connection and a second connection between the mobile terminal and the server.

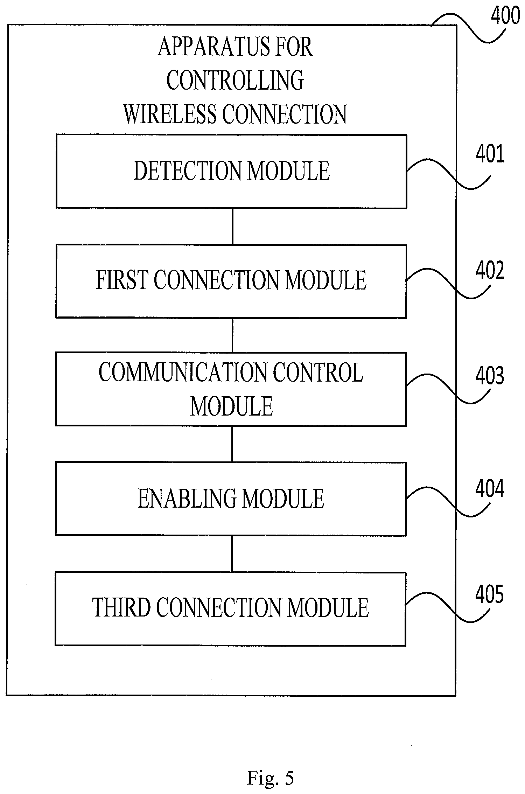

Fig. 5 is a block diagram illustrating another apparatus for controlling wireless connection according to an exemplary embodiment. As shown in Fig. 5, based on the apparatus for controlling wireless connection as shown in Fig. 4, the apparatus may also include an enabling module 404 and a third connection module 405.

The enabling module 404 is configured to enable the wireless local area network function of the electronic device when the first connection is disconnected.

The third connection module 405 is configured to establish a third connection between the wireless local area network and the router, and perform communication with the server through the third connection.

Optionally, the second connection is a connection established by the mobile terminal with the server through the wireless local area network or a data network.

Optionally, the wireless local area network comprises Wi-Fi, and the first connection manner comprises Bluetooth Low Energy BLE.

With respect to the apparatus in the above embodiments, the specific manners for performing operations for individual modules therein have been described in detail in the embodiments regarding the relevant methods, which will not be elaborated herein.

Accordingly, in the apparatus for controlling wireless connection provided by the present embodiment, when the electronic device is connected to the server by accessing a WLAN provided by a router, once it is detected that a mobile terminal has entered a range of connection of a first connection manner, the electronic device establishes a connection with the mobile terminal through the first connection manner, and disable the WLAN function, such that the electronic device performs communication with the server via the mobile terminal through the first connection manner which has a power consumption lower than that for the WLAN function. Thus, it may solve the problem in the related art that the power consumption is large for the connection between the electronic device and the server by reducing the power consumption for wireless communication between the electronic device and the server.

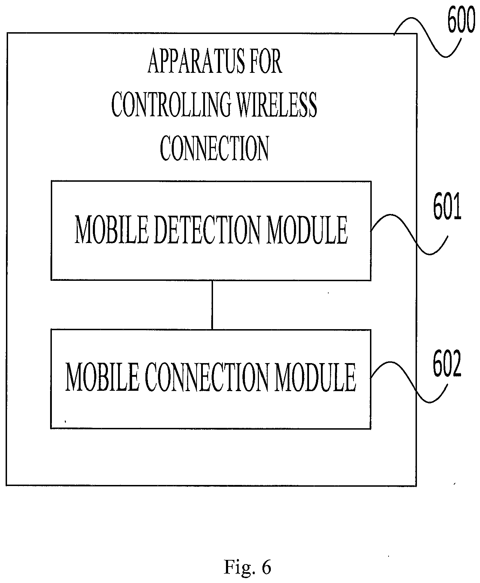

Fig. 6 is a block diagram illustrating an apparatus for controlling wireless connection. As shown in Fig. 6, the apparatus may be implemented in a mobile terminal, and includes a mobile detection module 601 and a mobile connection module 602.

The mobile detection module 601 is configured to detect whether an electronic device entering a range of connection of a first connection manner exists.

The mobile connection module 602 is configured to establish a first connection with the electronic device through the first connection manner when the electronic device is detected, the first connection manner being a connection manner with power consumption lower than that for the wireless local area network function of the electronic device.

The apparatus may also include a communication module 603 configured to perform communication between the electronic device and a server through the first connection and a second connection between the mobile terminal and the server.

Optionally, the second connection is a connection established by the mobile terminal with the server through the wireless local area network or a data network.

Optionally, the wireless local area network comprises Wi-Fi, and the first connection manner comprises Bluetooth Low Energy BLE.

With respect to the apparatus in the above example, the specific manners for performing operations for individual modules therein have been described in detail in the embodiments regarding the relevant methods, which will not be elaborated herein.

Accordingly, in the apparatus for controlling wireless connection provided by the present example, when the electronic device is connected to the server by accessing a WLAN provided by a router, once it is detected that a mobile terminal has entered a range of connection of a first connection manner, the electronic device establishes a connection with the mobile terminal through the first connection manner, and disable the WLAN function, such that the electronic device performs communication with the server via the mobile terminal through the first connection manner which has a power consumption lower than that for the WLAN function. Thus, it may solve the problem in the related art that the power consumption is large for the connection between the electronic device and the server by reducing the power consumption for wireless communication between the electronic device and the server.

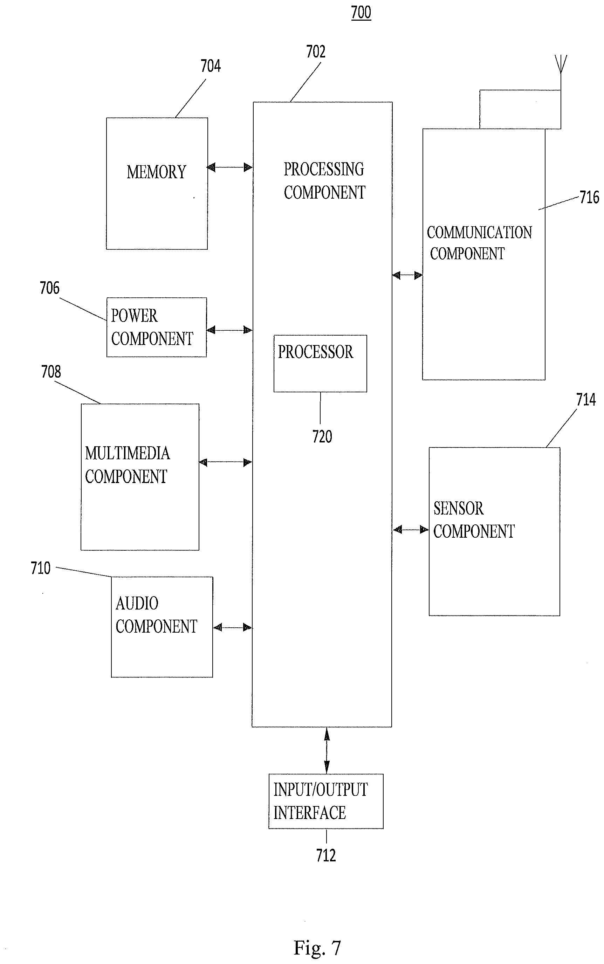

Fig. 7 is a block diagram illustrating an apparatus 700 configured to control wireless connection according to an exemplary embodiment, which may be implemented in an electronic device.

As shown in Fig. 7 is an apparatus 700 for interacting with a button according to an exemplary embodiment. For example, the apparatus 700 may be a mobile phone, a computer, a digital broadcast terminal, a messaging device, a gaming console, a tablet, a medical device, exercise equipment, a personal digital assistant, and the like.

Referring to Fig. 7, the apparatus 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the apparatus 700, such as the operations associated with display, telephone calls, data communications, camera operations, and recording operations. The processing component 702 may include one or more processors 720 to execute instructions to perform all or part of the steps in the above method for controlling wireless connection. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the apparatus 700. Examples of such data include instructions for any applications or methods operated on the apparatus 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the apparatus 700. The power component 706 may include a power management system, one or more power sources, and any other components associated with the generation, management, and distribution of power in the apparatus 700.

The multimedia component 708 includes a screen providing an output interface between the apparatus 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the apparatus 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone ("MIC") configured to receive an external audio signal when the apparatus 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the apparatus 700. For instance, the sensor component 714 may detect an open/closed status of the apparatus 700, relative positioning of components, e.g., the display and the keypad, of the apparatus 700, a change in position of the apparatus 700 or a component of the apparatus 700, a presence or absence of user contact with the apparatus 700, an orientation or an acceleration/deceleration of the apparatus 700, and a change in temperature of the apparatus 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the apparatus 700 and other devices. The apparatus 700 can access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 704, executable by the processor 720 in the apparatus 700, for performing the above-described method for controlling wireless connection. For example, the non-transitory computer-readable storage medium may be a ROM, a RAM, a CD-ROM, a magnetic tape, a floppy disc, an optical data storage device, and the like.

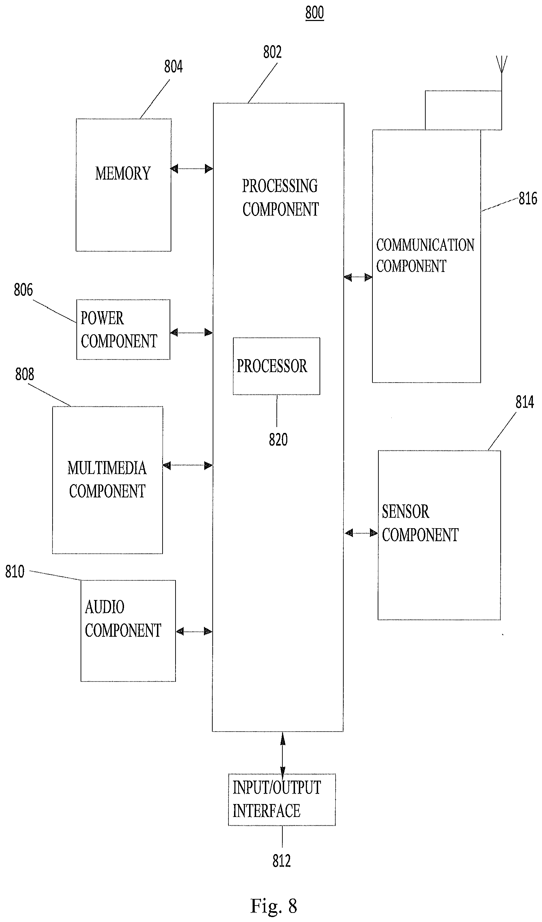

Fig. 8 is a block diagram illustrating another apparatus 800 configured to control wireless connection according to an exemplary embodiment. For example, the apparatus 800 may be a mobile phone, a computer, a digital broadcast terminal, a messaging device, a gaming console, a tablet, a medical device, exercise equipment, a personal digital assistant, and the like.

Referring to Fig. 8, the apparatus 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above method for controlling wireless connection. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power in the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the apparatus 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the apparatus 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components, e.g., the display and the keypad, of the apparatus 800, a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the apparatus 800 and other devices. The apparatus 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the apparatus 800, for performing the above-described method for controlling wireless connection. For example, the non-transitory computer-readable storage medium may be a ROM, a RAM, a CD-ROM, a magnetic tape, a floppy disc, an optical data storage device, and the like.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as exemplary only, with a true scope of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for controlling wireless connection, implemented in an electronic device comprising a wireless local area network, WLAN, function with the steps:
when the electronic device is connected to a server by accessing a WLAN provided by a router it is detected (101) whether a mobile terminal exists which is entering a range of a connection of a first connection manner;
establishing (102) a first connection with the mobile terminal through the first connection manner when the mobile terminal is detected, the first connection manner is a connection manner with a power consumption lower than that for the WLAN function of the electronic device; and
disabling (103) the WLAN function, and performing (103) communication with the server through the first connection and via a second connection between the mobile terminal and the server.

2. The method of claim 1, further comprising:
enabling (104) the WLAN function when the first connection is disconnected, and
establishing (105) a third connection with the router through the WLAN, and performing (105) communication with the server through the third connection.

3. The method of claim 1, wherein the second connection is a connection established by the mobile terminal with the server through the WLAN or a data network.

4. The method of any one of claims 1-3, wherein the WLAN comprises Wireless-Fidelity Wi-Fi, and the first connection manner comprises Bluetooth Low Energy BLE.

5. An apparatus for controlling wireless connection, which is implemented in an electronic device,
the apparatus comprising a detection module (401), a first connection module (402), a communication control module (403) and a wireless local area network, WLAN, function, **characterized in that**
the detection module (401) is configured to detect whether a mobile terminal exists which is entering a range of connection of a first connection manner, if the electronic device is connected to a server by accessing a WLAN provided by a router;
the first connection module (402) is configured to establish a first connection with the mobile terminal through the first connection manner when the mobile terminal is detected, the first connection manner being a connection manner with power consumption lower than that for the WLAN function of the electronic device; and
the communication control module (403) is configured to disable the WLAN function, and perform communication with the server through the first connection and via a second connection between the mobile terminal and the server.

6. The apparatus of claim 5, further comprising: an enabling module (404) and a third connection module (405), wherein
the enabling module (404) is configured to enable the WLAN function when the first connection is disconnected, and
the third connection module (405) is configured to establish a third connection with the router through the WLAN, and perform communication with the server through the third connection.

7. The apparatus of claim 5, wherein the second connection is a connection established by the mobile terminal with the server through the WLAN or a data network.

8. The apparatus of any one of claims 5-7, wherein the WLAN comprises Wireless-Fidelity Wi-Fi, and the first connection manner comprises Bluetooth Low Energy BLE.

9. A computer program including instructions for executing the steps of a method for controlling wireless connection according to any one of claims 1 to 4, when said program is executed by a computer.

10. A recording medium readable by a computer and having recorded thereon a computer program including instructions for executing the steps of a method for controlling wireless connection according to any one of claims 1 to 4.

## Patentansprüche

1. Verfahren zur Steuerung einer drahtlosen Verbindung, die in einem elektronischen Gerät implementiert ist, das eine Funktion eines drahtlosen lokalen Netzes, WLAN, aufweist, mit den folgenden Schritten:
wenn das elektronische Gerät durch Zugreifen auf ein WLAN, das von einem Router bereitgestellt wird, mit einem Server verbunden ist, wird detektiert (101), ob ein mobiles Endgerät, das in einen Bereich einer Verbindung einer ersten Verbindungsart eintritt, vorhanden ist;
Herstellen (102) einer ersten Verbindung auf eine erste Verbindungsart mit dem mobilen Endgerät, wenn das mobile Endgerät detektiert wird, wobei die erste Verbindungsart eine Verbindungsart ist, bei der ein Energieverbrauch niedriger ist als für die WLAN-Funktion des elektronischen Geräts; und
Deaktivieren (103) der WLAN-Funktion und Durchführen (103) einer Kommunikation mit dem Server durch die erste Verbindung und über eine zweite Verbindung zwischen dem mobilen Endgerät und dem Server.

2. Verfahren nach Anspruch 1, das ferner umfasst:
Aktivieren (104) der WLAN-Funktion, wenn die erste Verbindung getrennt ist, und
Herstellen (105) einer dritten Verbindung durch das WLAN mit dem Router und Durchführen (105) einer Kommunikation durch die dritte Verbindung mit dem Server.

3. Verfahren nach Anspruch 1, bei der die zweite Verbindung eine Verbindung ist, die von dem mobilen Endgerät durch das WLAN oder ein Datennetz mit dem Server hergestellt wird.

4. Verfahren nach einem der Ansprüche 1-3, bei dem das WLAN Wireless-Fidelity, Wi-Fi, umfasst und die erste Verbindungsart Bluetooth Low Energy, BLE, umfasst.

5. Vorrichtung zur Steuerung einer drahtlosen Verbindung, die in einem elektronischen Gerät implementiert ist, wobei die Vorrichtung ein Detektionsmodul (401), ein erstes Verbindungsmodul (402), ein Kommunikationssteuermodul (403) und eine Funktion eines drahtlosen lokalen Netzes, WLAN, aufweist,
**dadurch gekennzeichnet, dass**
das Detektionsmodul (401) derart ausgebildet ist, dass es detektiert, ob ein mobiles Endgerät, das in einen Bereich einer Verbindung einer ersten Verbindungsart eintritt, vorhanden ist, wenn das elektronische Gerät durch Zugreifen auf ein WLAN, das von einem Router bereitgestellt wird, mit einem Server verbunden ist;
das erste Verbindungsmodul (402) derart ausgebildet ist, dass es eine erste Verbindung auf eine erste Verbindungsart mit dem mobilen Endgerät herstellt, wenn das mobile Endgerät detektiert wird, wobei die erste Verbindungsart eine Verbindungsart ist, bei der ein Energieverbrauch niedriger ist als für die WLAN-Funktion des elektronischen Geräts; und
das Kommunikationssteuermodul (403) derart ausgebildet ist, dass es die WLAN-Funktion deaktiviert und eine Kommunikation mit dem Server durch die erste Verbindung und über eine zweite Verbindung zwischen dem mobilen Endgerät und dem Server durchführt.

6. Vorrichtung nach Anspruch 5, die ferner umfasst: ein Aktivierungsmodul (404) und ein drittes Verbindungsmodul (405), wobei
das Aktivierungsmodul (404) derart ausgebildet ist, dass es die WLAN-Funktion aktiviert, wenn die erste Verbindung getrennt ist, und
das dritte Verbindungsmodul (405) derart ausgebildet ist, dass es eine dritte Verbindung durch das WLAN mit dem Router herstellt und eine Kommunikation durch die dritte Verbindung mit dem Server durchführt.

7. Vorrichtung nach Anspruch 5, bei der die zweite Verbindung eine Verbindung ist, die von dem mobilen Endgerät durch das WLAN oder ein Datennetz mit dem Server hergestellt wird.

8. Vorrichtung nach einem der Ansprüche 5-7, bei der das WLAN Wireless-Fidelity, Wi-Fi, umfasst und die erste Verbindungsart Bluetooth Low Energy, BLE, umfasst.

9. Computerprogramm, das Anweisungen aufweist zum Ausführen der Schritte eines Verfahrens zur Steuerung einer drahtlosen Verbindung nach einem der Ansprüche 1 bis 4, wenn das Programm von einem Computer ausgeführt wird.

10. Aufzeichnungsmedium, das von einem Computer lesbar ist und auf dem ein Computerprogramm aufgezeichnet ist, das Anweisungen zum Ausführen der Schritte eines Verfahrens zur Steuerung einer drahtlosen Verbindung nach einem der Ansprüche 1-4 aufweist.

## Revendications

1. Procédé de commande de connexion sans fil, mis en œuvre dans un dispositif électronique comprenant une fonction de réseau local sans fil, WLAN, aux étapes consistant à:
lorsque le dispositif électronique est connecté à un serveur en accédant à un réseau WLAN fourni par un routeur, il est détecté (101) s'il existe ou non un terminal mobile qui entre dans une plage d'une connexion selon une première manière connexion;
établir (102) une première connexion avec le terminal mobile selon la première manière de connexion lorsque le terminal mobile est détecté, la première manière de connexion est une manière de connexion avec une consommation électrique inférieure à celle de la fonction WLAN du dispositif électronique; et
désactiver (103) la fonction WLAN et réaliser (103) une communication avec le serveur à travers la première connexion et à travers une deuxième connexion entre le terminal mobile et le serveur.

2. Procédé selon la revendication 1, comprenant par ailleurs le fait de:
activer (104) la fonction WLAN lorsque la première connexion est déconnectée, et
établir (105) une troisième connexion avec le routeur à travers le WLAN et réaliser (105) une communication avec le serveur à travers la troisième connexion.

3. Procédé selon la revendication 1, dans lequel la deuxième connexion est une connexion établie par le terminal mobile avec le serveur à travers le WLAN ou un réseau de données.

4. Procédé selon l'une quelconque des revendications 1 à 3, dans lequel le WLAN comprend un réseau de Fidélité Sans Fil, Wi-Fi, et la première manière de connexion comprend la technologie Bluetooth Low Energy, BLE.

5. Appareil de commande de connexion sans fil qui est mis en œuvre dans un dispositif électronique,
l'appareil comprenant un module de détection (401), un premier module de connexion (402), un module de commande de communication (403) et une fonction de réseau local sans fil, WLAN,
**caractérisé par le fait que**
le module de détection (401) est configuré pour détecter s'il existe ou non un terminal mobile qui entre dans une plage de connexion selon une première manière de connexion si le dispositif électronique est connecté à un serveur en accédant à un réseau WLAN fourni par un routeur;
le premier module de connexion (402) est configuré pour établir une première connexion avec le terminal mobile selon la première manière de connexion lorsque le terminal mobile est détecté, la première manière de connexion étant une manière de connexion avec une consommation d'énergie inférieure à celle de la fonction WLAN du dispositif électronique; et
le module de commande de communication (403) est configuré pour désactiver la fonction WLAN et réaliser une communication avec le serveur à travers la première connexion et à travers une deuxième connexion entre le terminal mobile et le serveur.

6. Appareil selon la revendication 5, comprenant par ailleurs: un module d'activation (404) et un troisième module de connexion (405), dans lequel
le module d'activation (404) est configuré pour activer la fonction WLAN lorsque la première connexion est déconnectée, et
le troisième module de connexion (405) est configuré pour établir une troisième connexion avec le routeur à travers le WLAN et pour établir une communication avec le serveur à travers la troisième connexion.

7. Appareil selon la revendication 5, dans lequel la deuxième connexion est une connexion établie par le terminal mobile avec le serveur à travers le WLAN ou un réseau de données.

8. Appareil selon l'une quelconque des revendications 5 à 7, dans lequel le WLAN comprend un réseau de Fidélité Sans Fil, Wi-Fi, et la première manière de connexion comprend la technologie Bluetooth Low Energy, BLE.

9. Programme d'ordinateur comportant des instructions pour réaliser les étapes d'un procédé de commande de connexion sans fil selon l'une quelconque des revendications 1 à 4, lorsque ledit programme est exécuté par un ordinateur.

10. Support d'enregistrement lisible par un ordinateur et présentant, y enregistré, un programme d'ordinateur comportant des instructions pour réaliser les étapes d'un procédé de commande de connexion sans fil selon l'une quelconque des revendications 1 à 4.
